# EUROPEAN PATENT SPECIFICATION

(11) **EP 3 530 949 B1**
(45) Date of publication and mention of the grant of the patent: **14.06.2023**
(21) Application number: 19158633.8
(22) Date of filing: 21.02.2019
(51) Int. Cl.: F04D 13/06, F04D 29/42, H02K 5/22

(54) **ELECTRIC PUMP ASSEMBLY WITH ELECTRIC POWER SUPPLY CONNECTOR**
ELEKTRISCHE PUMPENANORDNUNG MIT STROMVERSORGUNGSSTECKER
ENSEMBLE DE POMPE ÉLECTRIQUE AVEC CONNECTEUR D'ALIMENTATION ÉLECTRIQUE

(30) Priority: 27.02.2018 IT 201800003061
(43) Date of publication of application: 28.08.2019
(73) Proprietor: Dab Pumps S.p.A., 35035 Mestrino (Padova) (IT)
(72) Inventor: SINICO, Francesco, 36075 MONTECCHIO MAGGIORE VI (IT); CAILOTTO, Pietro, 36070 TRISSINO VI (IT); TRENTIN, Enrico, 36053 GAMBELLARA, FRAZIONE SORIO VI (IT); TAZIOLI, Stefano, 57016 ROSIGNANO MARITTIMO, LOCALITA' GABBRO LI (IT)
(74) Representative: Tiburzi, Andrea

(56) References cited:
- EP-A2- 1 315 271
- DE-A1-102011 013 952
- DE-U1-202017 101 204

## Description

The present invention relates to a centrifugal electric pump assembly with electric power supply connector.

The invention is applicable in the industrial field, in the sector of electric pumps and particularly but not exclusively in the sector of electric pumps for domestic use.

Currently, electric pumps have an electric motor for moving the impeller and an electrical box containing the electronic components required to control the motor and ensure the correct operation of the electric pump.

Electric pumps are powered with electric current.

Generally, an electrical cable connects the electrical box of the electric pump to the electrical mains.

However, these known methods have some aspects that can be improved.

Normally, the end of the electrical cable is inserted in the electrical box and is connected to a terminal of the box by means of a terminal strip.

In order to facilitate the connection operation, the end of the cable is inserted in a connector, which is shaped appropriately to enter the portion of the electrical box to which it is connected, which is proximate to its terminal.

However, the cable, which is only inserted, can slide out accidentally, interrupting the electric power supply and thus compromising the regular operation of the electric pump. DE 102011013952 A1, DE202017101204 U1 and EP1315271 A2 represent the background art of the invention.

The aim of the present invention is to provide a centrifugal electric pump assembly with electric power supply connector that is capable of improving the background art in one or more of the aspects indicated above.

Within this aim, an object of the invention is to provide a centrifugal electric pump assembly with connector that cannot disconnect accidentally.

Another object of the invention is to provide a centrifugal electric pump assembly with connector that allows effective connection to the electrical power supply cable.

Not least object of the invention is to provide a centrifugal electric pump assembly according to claim 1.

Further characteristics and advantages will become better apparent from the description of a preferred but not exclusive embodiment of the centrifugal electric pump assembly with electric power supply connector according to the invention, illustrated by way of non-limiting example in the accompanying drawings, wherein:

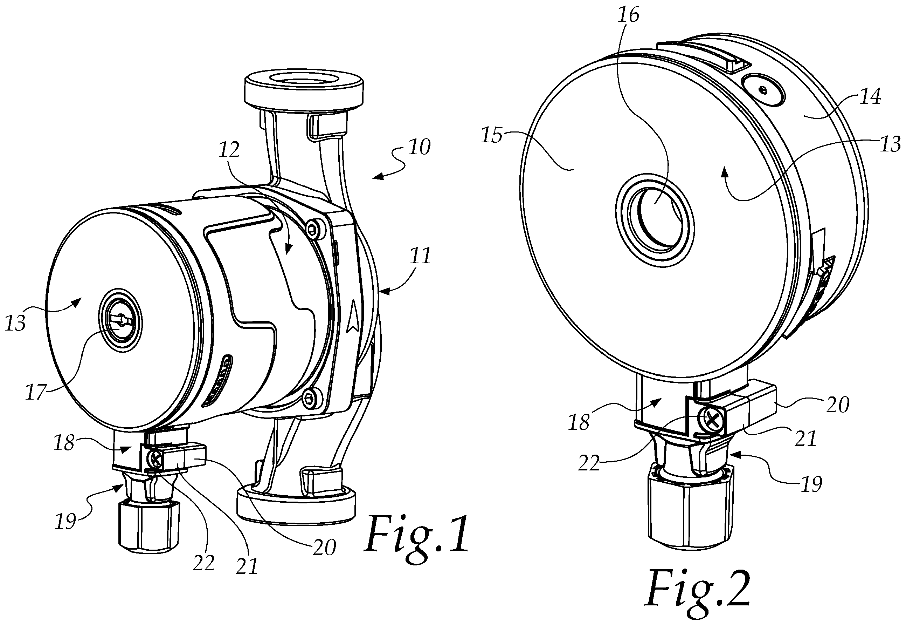

Figure 1 is a general view of a centrifugal electric pump assembly according to the invention;
Figure 2 is a view of a detail of the electric pump assembly of Figure 1;

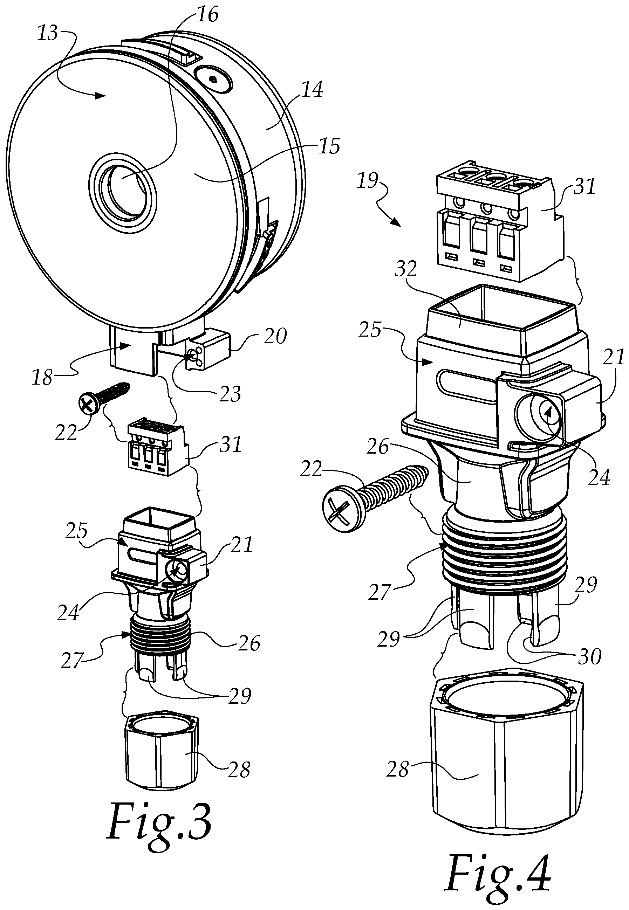

Figure 3 is an exploded view of the detail of Figure 2;
Figure 4 is an enlarged-scale exploded view of a detail of Figure 3.

With reference to the figures, a centrifugal electric pump assembly according to the invention is generally designated by the reference numeral 10.

The electric pump assembly 10 includes a pump body 11 comprising a wet section, provided with a volute and with intake and delivery ducts.

The pump body 11 is faced by a casing 12 for accommodating the electric motor, in which there is an electric motor adapted to move one or more impellers, not shown in the figures.

The casing 12 has a first end associated with the pump body 11, while the opposite end is associated with an electrical box 13.

This box 13 contains the electronic components required to control the electric motor to which it is connected.

In particular, the box 13 has a cylindrical extension and is constituted by a tray 14 with a substantially circular rim, the base of which faces the casing 12 and the side wall of which is extended in the direction of the axis of the impeller; the tray 14 is closed hermetically at the free end by a circular lid 15.

The box 13 has a central tubular body 16 for the insertion of a plug 17 for accessing the wet section.

The box 13 is also provided with a tubular tab 18 which extends from the side wall of the tray 14.

In the example shown in the figures, the tab 18 protrudes below the box 13.

The tab 18 is substantially shaped like a parallelepiped and is adapted for the insertion of a connector 19 for the electric power supply of the electric pump 10.

The tab 18 is provided with at least one first element 20 for anchoring to the connector 19, which is monolithic with the tab 18.

The first anchoring element 20 has such a shape as to be complementary to at least one corresponding second anchoring element 21, which is provided on the connector 19 and is monolithic therewith.

In particular, the first anchoring element 20 has a first hole 23, which is not necessarily a through hole, while the second anchoring element 21 has a second through hole 24.

The holes 23 and 24 are adapted to match up, facing each other, after the assembly of the electric pump 10, generating a single hole for the insertion of at least one fixing element 22, such as for example a screw and/or a pin.

The shape of the anchoring elements 20 and 21 and the presence of the fixing element have the purpose of providing a connection between the electric pump 10 and the electric power supply that cannot be removed accidentally.

The connector 19 comprises a substantially tubular body adapted for the insertion of an electrical cable, not shown in the figures.

The tubular body of the connector 19 has a first portion 25 that is substantially shaped like a parallelepiped and is adapted to be inserted in the tab 18 of the box 13.

The parallelepiped shape of the portion 25 and of the tab 18 allow to provide a reduced space occupation with respect to similar connectors having a cylindrical shape.

An interlock, or at least an interference, is produced between the tab 18 and the first portion 25 of the connector 19, inserted in the tab 18.

In particular, the tab 18 and the first portion 25 have complementary shapes.

The second anchoring element 21, described previously, is extended substantially on a wall of this first portion 25.

The first portion 25 is adapted for the insertion of a terminal strip 31, for electrical connection to a terminal of the box 13, not shown in the figures.

The terminal strip 31 is of a per se known type which can be purchased from a catalog.

The first portion 25 has a raised edge 32 adapted to interact with a corresponding perimetric profile which is internal to the tab 18, not shown in the figures.

This perimetric profile is made of plastic material, such as for example rubber, co-molded with the tab 18, and is intended to ensure a seal between the tab 18 and the connector 19.

In particular, it is known from experimental tests that the seal provided between the raised rim 32 and the perimetric profile inside the tab 18 contributes to ensure a degree of sealing of the electric pump assembly that can reach the IPX5 level.

The tubular body of the connector 19 is furthermore provided with a second portion 26, which is tubular and cylindrical and is adjacent to the first portion 25.

The second portion 26 comprises a threaded region 27 in a part of the external surface.

This threaded region 27 is adapted for the screwing of a complementarily threaded nut 28.

Multiple wings 29 extend from the end of this threaded region 27 that is opposite with respect to the first portion 25, along the circular rim of the second portion 26.

In the example shown in the figures, the wings 29 are four.

These wings 29 have an extension that is substantially parallel to the extension of the connector 19.

These wings 29 are adapted to fasten onto the electrical cable, once it has been inserted, due to the screwing of the nut 28 on the threaded region 27.

Each wing 29 has an end tooth 30, which is directed toward the axis of extension of said connector 19, adapted to improve the fastening on the cable and ensure better extraction-prevention resistance.

In practice it has been found that the invention achieves the intended aim and objects, providing a centrifugal electric pump assembly with a low-cost connector that does not run the risk of disconnecting accidentally and allows adequate connection to the electric power supply.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A centrifugal electric pump assembly (10) comprising
a pump body (11), which has a wet section, constituted by a volute and by intake and delivery ducts,
a casing (12) containing an electric motor, which faces said pump body (11), and
an electrical box (13), at the end of said casing (12) that is opposite with respect to said pump body (11),
wherein said centrifugal electric pump assembly (10) comprises a connector (19) for electric power supply, which is shaped so as to be complementary to a tab (18) of said electrical box (13), said tab (18) having the shape of a parallelepiped, and
wherein said centrifugal electric pump assembly (10) has at least one element (22) for fixing said connector (19) to said electrical box (13), wherein the said tab (18) of said box (13) has at least one first element (20) for monolithic anchoring with said tab (18) and said connector (19) has a corresponding second anchoring element (21), which is complementary to said first element (20) and monolithic with said connector (19) and **characterized in that** said first anchoring element (20) is provided with a first hole (23), which is not necessarily a through hole, and said second anchoring element (21) has a second through hole (24), said holes (23, 24) being adapted to match up, facing each other, after the assembly of said electric pump (10), generating a single hole for the insertion of the at least one fixing element (22).

2. The electric pump assembly (10) according to the preceding claim, **characterized in that** said at least one fixing element (22) is a screw and/or a pin.

3. The electric pump assembly (10) according to the preceding claim, **characterized in that** said connector (19) comprises a substantially tubular body.

4. The electric pump assembly (10) according to the preceding claim, **characterized in that** said tubular body of said connector (19) has a first portion (25) which is substantially shaped like a parallelepiped, comprising a raised rim (32).

5. The electric pump assembly (10) according to Z the preceding claim, **characterized in that** said tab (18) of said box (13) comprises an internal perimetric profile, which is made of plastic material which is co-molded with said tab (18), said internal perimetric profile interacting with said raised rim (32) of said first portion (25).

6. The electric pump assembly (10) according to Z one or more of claims 3-5, **characterized in that** said tubular body of said connector (19) has a second cylindrical tubular portion (26), which is adjacent to said first portion (25), which comprises a threaded region (27) in a part of the external surface and a nut (28) which is threaded complementarily for said region (27).

7. The electric pump assembly (10) according to the preceding claim, **characterized in that** multiple wings (29) extend from the end of said threaded region (27) that is opposite with respect to said first portion (25), along the circular rim of said second portion (26).

8. The electric pump assembly (10) according to the preceding claim, **characterized in that** each wing (29) is provided with an end tooth (30) which is directed toward the axis of extension of said connector (19).

## Patentansprüche

1. Elektrische Kreiselpumpenanordnung (10), umfassend einen Pumpenkörper (11), der einen Nassbereich aufweist, der aus einem Spiralgehäuse und aus Ansaug- und Auslasskanälen besteht, ein Gehäuse (12), das einen Elektromotor enthält, der dem Pumpenkörper (11) gegenüberliegt, und einen Schaltkasten (13) an dem Ende des Gehäuses (12), das dem Pumpenkörper (11) gegenüberliegt, wobei die elektrische Kreiselpumpenanordnung (10) einen Verbinder (19) zur Stromversorgung umfasst, der geformt ist, um komplementär zu einer Lasche (18) des Schaltkastens (13) zu sein, wobei die Lasche (18) die Form eines Parallelepipeds aufweist, und wobei die elektrische Kreiselpumpenanordnung (10) mindestens ein Element (22) zum Befestigen des Verbinders (19) an dem Schaltkasten (13) aufweist, wobei die Lasche (18) des Gehäuses (13) mindestens ein erstes Element (20) zum monolithischen Verankern mit der Lasche (18) aufweist und der Verbinder (19) ein entsprechendes zweites Verankerungselement (21) aufweist, das komplementär zu dem ersten Element (20) und monolithisch mit dem Verbinder (19) ist, und **dadurch gekennzeichnet, dass** das erste Verankerungselement (20) mit einem ersten Loch (23) versehen ist, das nicht notwendigerweise ein Durchgangsloch ist, und das zweite Verankerungselement (21) ein zweites Durchgangsloch (24) aufweist, wobei die Löcher (23, 24) angepasst sind, um nach Zusammenbau der elektrischen Pumpe (10) einander gegenüberliegend zusammenzupassen und ein einziges Loch zum Einsetzen des mindestens einen Befestigungselements (22) zu erzeugen.

2. Elektrische Pumpenanordnung (10) nach dem vorherigen Anspruch, **dadurch gekennzeichnet, dass** das mindestens eine Befestigungselement (22) eine Schraube und/oder ein Stift ist.

3. Elektrische Pumpenanordnung (10) nach dem vorherigen Anspruch, **dadurch gekennzeichnet, dass** der Verbinder (19) einen im Wesentlichen rohrförmigen Körper umfasst.

4. Elektrische Pumpenanordnung (10) nach dem vorherigen Anspruch, **dadurch gekennzeichnet, dass** der rohrförmige Körper des Verbinders (19) einen ersten Abschnitt (25) aufweist, der im Wesentlichen wie ein Parallelepiped geformt ist und einen erhöhten Rand (32) umfasst.

5. Elektrische Pumpenanordnung (10) nach dem vorherigen Anspruch, **dadurch gekennzeichnet, dass** die Lasche (18) des Gehäuses (13) ein inneres Umfangsprofil umfasst, das aus Kunststoffmaterial gefertigt ist, das zusammen mit der Lasche (18) geformt ist, wobei das innere Umfangsprofil mit dem erhöhten Rand (32) des ersten Abschnitts (25) zusammenwirkt.

6. Elektrische Pumpenanordnung (10) nach einem oder mehreren der Ansprüche 3 bis 5, **dadurch gekennzeichnet, dass** der rohrförmige Körper des Verbinders (19) einen zweiten zylindrischen rohrförmigen Abschnitt (26) aufweist, der an den ersten Abschnitt (25) angrenzt und einen Gewindebereich (27) in einem Teil der Außenfläche sowie eine Mutter (28) umfasst, die komplementär zu dem Bereich (27) mit einem Gewinde versehen ist.

7. Elektrische Pumpenanordnung (10) nach dem vorherigen Anspruch, **dadurch gekennzeichnet, dass** sich mehrere Flügel (29) von dem Ende des Gewindebereichs (27), das in Bezug auf den ersten Abschnitt (25) gegenüberliegt, entlang des kreisförmigen Rands des zweiten Abschnitts (26) erstrecken.

8. Elektrische Pumpenanordnung (10) nach dem vorherigen Anspruch, **dadurch gekennzeichnet, dass** jeder Flügel (29) mit einem Endzahn (30) versehen ist, der auf die Erstreckungsachse des Verbinders (19) gerichtet ist.

## Revendications

1. Assemblage de pompe électrique centrifuge (10) comprenant un corps de pompe (11), qui présente une section humide, constituée d'une volute et de conduits d'aspiration et de refoulement, un boîtier (12) contenant un moteur électrique, qui fait face audit corps de pompe (11), et un coffret électrique (13), à l'extrémité dudit boîtier (12) qui est opposée par rapport audit corps de pompe (11), dans lequel ledit assemblage de pompe électrique centrifuge (10) comprend un connecteur (19) pour l'alimentation électrique, qui est façonné de manière à être complémentaire d'une languette (18) dudit coffret électrique (13), ladite languette (18) ayant la forme d'un parallélépipède, et dans lequel ledit assemblage de pompe électrique centrifuge (10) présente au moins un élément (22) pour fixer ledit connecteur (19) audit coffret électrique (13), dans lequel ladite languette (18) dudit coffret (13) présente au moins un premier élément (20) d'ancrage monolithique avec ladite languette (18) et ledit connecteur (19) présente un second élément d'ancrage correspondant (21), qui est complémentaire audit premier élément (20) et monolithique avec ledit connecteur (19) et **caractérisé en ce que** ledit premier élément d'ancrage (20) est pourvu d'un premier trou (23), qui n'est pas nécessairement un trou traversant, et ledit second élément d'ancrage (21) présente un second trou traversant (24), lesdits trous (23, 24) étant adaptés pour se rejoindre, face à face, après l'assemblage de ladite pompe électrique (10), générant un seul trou pour l'insertion de l'au moins un élément de fixation (22).

2. Assemblage de pompe électrique (10) selon la revendication précédente, **caractérisé en ce que** ledit au moins un élément de fixation (22) est une vis et/ou une goupille.

3. Assemblage de pompe électrique (10) selon la revendication précédente, **caractérisé en ce que** ledit connecteur (19) comprend un corps sensiblement tubulaire.

4. Assemblage de pompe électrique (10) selon la revendication précédente, **caractérisé en ce que** ledit corps tubulaire dudit connecteur (19) présente une première partie (25) qui est sensiblement en forme de parallélépipède, comprenant un rebord surélevé (32).

5. Assemblage de pompe électrique (10) selon la revendication précédente, **caractérisé en ce que** ladite languette (18) dudit coffret (13) comprend un profil périmétrique interne, qui est constitué de matériau plastique qui est co-moulé avec ladite languette (18), ledit profil périmétrique interne interagissant avec ledit rebord surélevé (32) de ladite première partie (25).

6. Assemblage de pompe électrique (10) selon une ou plusieurs des revendications 3-5, **caractérisé en ce que** ledit corps tubulaire dudit connecteur (19) présente une seconde partie tubulaire cylindrique (26), qui est adjacente à ladite première partie (25), qui comprend une région filetée (27) dans une partie de la surface externe et un écrou (28) qui est fileté de manière complémentaire pour ladite région (27).

7. Assemblage de pompe électrique (10) selon la revendication précédente, **caractérisé en ce que** de multiples ailes (29) s'étendent de l'extrémité de ladite région filetée (27) qui est opposée par rapport à ladite première partie (25), le long du rebord circulaire de ladite seconde partie (26).

8. Assemblage de pompe électrique (10) selon la revendication précédente, **caractérisé en ce que** chaque aile (29) est pourvue d'une dent d'extrémité (30) qui est dirigée vers l'axe d'extension dudit connecteur (19) .
